# FASCICULE DE BREVET EUROPEEN

(11) **EP 3 662 692 B1**
(45) Date de publication et mention de la délivrance du brevet: **04.05.2022**
(21) Numéro de dépôt: 18755873.9
(22) Date de dépôt: 26.07.2018
(51) Int. Cl.: H04W 12/06, H04L 29/06

(54) **OBTENTION D'UN PROFIL D'ACCÈS À UN RÉSEAU DE COMMUNICATION PAR UN TERMINAL SECONDAIRE VIA UN TERMINAL PRINCIPAL**
GEWINNUNG EINES ZUGRIFFSPROFILS FÜR EIN KOMMUNIKATIONSNETZ DURCH EIN SEKUNDÄRES ENDGERÄT ÜBER EIN HAUPTENDGERÄT
OBTAINING A PROFILE FOR ACCESS TO A COMMUNICATION NETWORK BY A SECONDARY TERMINAL VIA A MAIN TERMINAL

(30) Priorité: 03.08.2017 FR 1757502
(43) Date de publication de la demande: 10.06.2020
(73) Titulaire: ORANGE, 92130 Issy-les-Moulineaux (FR)
(72) Inventeur: GAMISHEV, Todor, 92326 Chatillion Cedex (FR); GHAROUT, Saïd, 92326 Chatillion (FR)
(86) Numéro de dépôt international: PCT/FR2018/051925
(87) Numéro de publication internationale: WO 2019/025704

(56) Documents cités:
- EP-A1- 2 741 459
- US-A1- 2016 021 635
- US-A1- 2016 242 032

## Description

La présente invention concerne le domaine de l'accès à un réseau mobile de communication. Plus précisément elle porte sur l'obtention d'un profil d'accès à un réseau par un premier terminal mobile, dit terminal secondaire, au moyen d'un deuxième terminal, dit terminal principal, équipé d'un module de sécurité.

Pour accéder à un réseau mobile, par exemple un réseau mobile de type « EPS » (pour « Evolved Packet System »), un terminal mobile doit s'authentifier auprès d'un fournisseur de connectivité au moyen de secrets partagés entre le module de sécurité compris dans le terminal mobile, et un centre d'authentification du fournisseur de connectivité. Une fois l'authentification réalisée avec succès, le terminal et le réseau partagent la connaissance d'une hiérarchie de clés générée d'une part par le terminal et le module de sécurité et d'autre part par le réseau et permettant l'accès et l'échange de données sécurisés entre le terminal mobile et le réseau.

La notion d'accès au réseau mobile de façon temporaire et/ou à partir d'un équipement mobile qui ne possède pas de module de sécurité n'existe pas, afin de prévenir des fraudes basées par exemple sur le clonage des données d'authentification (on parle de « credentials » en anglais) comprises dans le module de sécurité du terminal mobile et nécessaires pour l'accès au réseau.

Il est cependant possible pour un terminal qui n'est pas équipé d'un module de sécurité ou/et de données d'authentification adéquates, d'accéder au réseau mobile au moyen d'un terminal mobile équipé d'un module de sécurité. Le terminal mobile est utilisé dans ce cas comme un modem ; il fournit une connexion Internet au terminal. Le terminal se connecte au terminal mobile au moyen d'un câble, par exemple un câble USB, ou au moyen d'une communication sans fil telle qu'en Bluetooth ou en WiFi. Un tel partage de connexion Internet avec un équipement mobile équipé d'un module de sécurité et utilisé comme modem est habituellement appelé « tethering » en anglais.

Pour autant, l'accès au réseau par le terminal qui ne dispose pas d'un élément de sécurité et/ou de données d'authentification adéquates est contraignant. Par exemple, l'accès au réseau impose à ce terminal de rester à proximité du terminal mobile équipé d'un module de sécurité et qui est utilisé comme modem pour fournir la connexion Internet. Un tel accès nécessite également que le terminal mobile qui est utilisé comme modem soit chargé durant toute la session d'accès au réseau par le terminal qui l'utilise pour accéder au réseau.

La publication brevet US 2016/242032 décrit une méthode dans laquelle un premier terminal fournit à un deuxième terminal une partie de ses propres données d'authentification à un deuxième terminal, afin que ce dernier puisse accéder au réseau sous contrôle du premier terminal.

Un des buts de l'invention est de remédier à des insuffisances/inconvénients de l'état de la technique et/ou d'y apporter des améliorations.

La présente invention est définie par l'objet des revendications indépendantes. Des modes de réalisation particuliers sont définis par les revendications dépendantes.

A cette fin, l'invention propose un procédé d'obtention d'un profil d'accès à un réseau de communication par un terminal secondaire via un terminal principal, le terminal principal comprenant un élément de sécurité comprenant une clé d'authentification, ladite clé d'authentification étant utilisée par le réseau et par le terminal principal pour générer au moins une clé maîtresse de session propre au terminal principal, le procédé selon la revendication 1, mis en œuvre par le terminal secondaire.

Avec le procédé d'obtention d'un profil d'accès au réseau tel que décrit ici, un terminal secondaire possédant des capacités radio mais ne disposant initialement d'aucune donnée pour accéder au réseau génère un profil d'accès au réseau qui est partagé avec le réseau et qui lui permet d'accéder au réseau.

Le profil qui est généré par l'intermédiaire du terminal principal n'implique pas de dépendance d'un point de vue connexion entre le terminal secondaire et le terminal principal. En effet, une fois le profil d'accès généré et partagé entre le terminal secondaire et le réseau, l'accès du terminal secondaire au réseau peut se faire indépendamment du terminal principal. Ainsi, il n'y a pas de nécessité, pour le terminal secondaire, d'être à proximité géographique du terminal principal. Il n'y a pas de nécessité non plus que le terminal principal soit allumé et/ou chargé, contrairement aux contraintes induites par le tethering.

La génération du profil d'accès au réseau et également du contexte de sécurité est contrôlée par le réseau. Notamment la génération de la clé temporaire, est mise en œuvre dans le réseau. Cela contribue à la sécurité du procédé dans le sens où cela évite tout risque de clonage de données d'authentification sur le terminal secondaire, qui n'en possède pas.

Par ailleurs, la durée de vie de la clé temporaire et des clés qui en dépendent, telle que la clé de session secondaire est limitée à la durée d'une session d'accès courante. Cela limite les risques de compromission.

Le procédé permet de générer de part et d'autre, c'est-à-dire au niveau du terminal secondaire et du réseau un profil d'accès au réseau sans que des échanges de messages comparables à ceux d'un attachement au réseau ne soient mis en œuvre. En effet, la génération du profil se fait dans le cadre d'un contexte de sécurité existant, en l'espèce celui qui a été généré pour le terminal principal existant. Ainsi, la génération du profil d'accès pour le terminal secondaire n'induit pas de charge supplémentaire dans le réseau, inhérente à des échanges qui auraient lieu dans le cas d'un attachement classique au réseau du terminal secondaire.

La clé temporaire est propre au terminal secondaire.

De plus la réception de la clé temporaire, de l'identifiant temporaire du terminal secondaire et d'un identifiant du réseau d'accès au réseau indique au terminal secondaire son authentification auprès du réseau d'accès identifié et l'authentification de ce réseau d'accès auprès du terminal secondaire.

Dans un exemple de réalisation, le procédé d'obtention d'un profil d'accès comprend une génération d'une clé maîtresse de session secondaire à partir de la clé temporaire et de l'identifiant du terminal secondaire.

Cette clé maîtresse de session secondaire est propre au terminal secondaire.

La clé maîtresse de session secondaire est destinée à être utilisée pour générer une hiérarchie de clés pour un accès sécurisé au réseau du terminal secondaire. Elle est comprise dans le contexte de sécurité propre au terminal secondaire et est donc nécessaire pour un accès au réseau par le terminal secondaire.

Dans un exemple de réalisation, le procédé d'obtention d'un profil d'accès comprend une génération d'une clé maîtresse de session secondaire à partir de la clé temporaire, de l'identifiant du terminal secondaire et de l'identifiant du réseau d'accès au réseau.

L'invention concerne aussi un procédé d'aide à l'obtention d'un profil d'accès à un réseau de communication par un terminal secondaire via un terminal principal, le terminal principal comprenant un module de sécurité comprenant une clé d'authentification, ladite clé d'authentification étant utilisée par le réseau et par le terminal principal pour générer au moins une clé maîtresse de session propre au terminal principal, le procédé, mis en œuvre par le terminal principal, comprenant :
- obtention d'un identifiant du terminal secondaire,
- envoi au réseau d'une requête d'abonnement temporaire pour le terminal secondaire, ladite requête comprenant l'identifiant du terminal secondaire,
- réception, en provenance du réseau, d'un identifiant temporaire du terminal secondaire généré par le réseau,
- génération d'une clé temporaire propre au terminal secondaire, à partir de la clé maîtresse de session du terminal principal et de l'identifiant temporaire du terminal secondaire,
- envoi au terminal secondaire de la clé temporaire et de l'identifiant temporaire du terminal secondaire, et d'un identifiant du réseau d'accès au réseau.

Le procédé décrit ici correspond à une mise en œuvre au niveau du terminal principal.

Dans un exemple de réalisation, la requête d'abonnement temporaire pour le terminal secondaire comprend une durée de l'abonnement.

Le terminal principal peut ainsi préciser dans la requête d'abonnement temporaire pour le terminal secondaire, la durée de validité du profil d'accès au réseau destiné au terminal secondaire UE2. Le contrôle de la durée est alors géré au niveau du réseau. Cependant, c'est le terminal principal, dont le profil d'accès au réseau et le contexte de sécurité sont utilisés pour générer le profil d'accès au réseau du terminal secondaire qui garde la maîtrise de cette durée.

L'invention concerne aussi un procédé de génération d'un profil d'accès à un réseau de communication pour un terminal secondaire via un terminal principal, le terminal principal comprenant un module de sécurité comprenant une clé d'authentification, ladite clé d'authentification étant utilisée par le réseau et par le terminal principal pour générer au moins une clé maitresse de session propre au terminal principal, le procédé mis en œuvre par le réseau comprenant :
- réception, en provenance du terminal principal, d'une requête d'abonnement temporaire pour le terminal secondaire, ladite requête comprenant un identifiant du terminal secondaire,
- génération d'un identifiant temporaire et d'une clé temporaire du terminal secondaire, ladite clé temporaire étant générée à partir de l'identifiant temporaire du terminal secondaire et de la clé maîtresse de session du terminal principal, la clé temporaire, l'identifiant temporaire et l'identifiant du terminal secondaire, et un identifiant du réseau d'accès au réseau étant compris dans un profil d'accès au réseau du terminal secondaire,
- envoi au terminal principal de l'identifiant temporaire du terminal secondaire.

Le procédé de génération d'un profil d'accès décrit ici correspond à une mise en œuvre au niveau du réseau. Au terme de ces étapes, le réseau possède le profil d'accès au réseau du terminal secondaire.

Dans un exemple de réalisation, le procédé de génération d'un profil d'accès comprend une génération d'une clé maîtresse de session secondaire propre au terminal secondaire à partir de la clé temporaire et de l'identifiant du terminal secondaire.

Ainsi, le réseau est apte à générer le contexte de sécurité propre au terminal secondaire et nécessaire pour que ce dernier accède au réseau de manière sécurisée.

Dans un exemple de réalisation, le procédé de génération d'un profil d'accès comprend une génération d'une clé maîtresse de session secondaire à partir de la clé temporaire, de l'identifiant du terminal secondaire et de l'identifiant du réseau d'accès au réseau.

L'invention porte également sur un terminal secondaire agencé pour obtenir un profil d'accès à un réseau de communication via un terminal principal, le terminal principal comprenant un élément de sécurité comprenant une clé d'authentification, ladite clé d'authentification étant utilisée par le réseau et par le terminal principal pour générer au moins une clé maîtresse de session propre au terminal principal, le terminal secondaire comprenant des moyens selon la revendication 7.

Dans un exemple de réalisation, le terminal secondaire comprend des moyens de génération, agencés pour générer une clé maîtresse de session secondaire propre au terminal secondaire à partir de la clé temporaire et de l'identifiant du terminal secondaire.

L'invention concerne aussi un programme pour un terminal secondaire, comprenant des instructions de code de programme destinées à commander l'exécution des étapes du procédé d'obtention d'un profil d'accès à un réseau de communication, décrit précédemment, lorsque le programme est exécuté sur ledit terminal secondaire.

L'invention concerne aussi un terminal principal agencé pour aider à l'obtention d'un profil d'accès à un réseau de communication par un terminal secondaire, le terminal principal comprenant un module de sécurité comprenant une clé d'authentification, ladite clé d'authentification étant utilisée par le réseau et par le terminal principal pour générer au moins une clé maîtresse de session propre au terminal principal, le terminal principal comprenant :
- des moyens d'obtention, agencés pour obtenir un identifiant du terminal secondaire,
- des premiers moyens d'envoi, agencés pour envoyer au réseau une requête d'abonnement temporaire pour le terminal secondaire, ladite requête comprenant l'identifiant du terminal secondaire,
- des moyens de réception, agencés pour recevoir en provenance du réseau un identifiant temporaire du terminal secondaire généré par le réseau,
- des moyens de génération, agencés pour générer une clé temporaire, ladite clé temporaire étant générée à partir la clé maîtresse de session du terminal principal et de l'identifiant temporaire du terminal secondaire,
- des deuxièmes moyens d'envoi, agencés pour envoyer au terminal secondaire la clé temporaire, l'identifiant temporaire et un identifiant du réseau d'accès au réseau.

L'invention porte également sur un programme pour un terminal principal, comprenant des instructions de code de programme destinées à commander l'exécution des étapes du procédé d'aide à l'obtention d'un profil d'accès à un réseau de communication par un terminal secondaire via le terminal utilisateur, selon la revendication 3 ou la revendication 4, lorsque le programme est exécuté sur ledit terminal.

L'invention concerne également un dispositif d'un réseau de communication, agencé pour générer un profil d'accès à un réseau de communication pour un terminal secondaire via un terminal principal, le terminal principal comprenant un module de sécurité comprenant une clé d'authentification, ladite clé d'authentification étant utilisée par le réseau et par le terminal principal pour générer au moins une clé maitresse de session propre au terminal principal, le dispositif comprenant :
- des moyens de réception, agencés pour recevoir, en provenance du terminal principal, une requête d'abonnement temporaire pour le terminal secondaire, ladite requête comprenant un identifiant du terminal secondaire,
- des premiers moyens de génération, agencés pour générer un identifiant temporaire et une clé temporaire propre au terminal secondaire, ladite clé temporaire étant générée à partir de l'identifiant temporaire du terminal secondaire et de la clé maîtresse de session du terminal principal, la clé temporaire, l'identifiant temporaire, l'identifiant du terminal secondaire et un identifiant du réseau d'accès au réseau étant compris dans un profil d'accès au réseau du terminal secondaire,
- des moyens d'envoi, agencés pour envoyer au terminal principal l'identifiant temporaire du terminal secondaire.

Dans un exemple de réalisation, le dispositif réseau comprend des deuxièmes moyens de génération, agencés pour générer une clé maîtresse de session secondaire à partir de la clé temporaire et de l'identifiant du terminal secondaire, la clé maîtresse de session secondaire, l'identifiant temporaire du terminal secondaire et un identifiant du réseau étant compris dans un profil d'accès au réseau du terminal secondaire.

L'invention concerne aussi un programme pour un dispositif d'un réseau de communication, comprenant des instructions de code de programme destinées à commander l'exécution des étapes d'un procédé de génération d'un profil d'accès à un réseau de communication pour un terminal secondaire via un terminal principal tel que décrit précédemment, lorsque le programme est exécuté sur ledit dispositif.

L'invention porte également sur un système d' d'obtention d'un profil d'accès à un réseau de communication par un terminal secondaire via un terminal principal comprenant :
- un dispositif réseau tel que décrit précédemment,
- un terminal principal tel que décrit précédemment, et au moins un terminal secondaire tel que décrit précédemment.

D'autres caractéristiques et avantages de la présente invention seront mieux compris de la description et des dessins annexés parmi lesquels :
- la figure 1 présente les étapes d'un procédé d'obtention d'un profil d'accès à un réseau de communication par un terminal secondaire via un terminal principal, selon un exemple de réalisation ;
- la figure 2 est une représentation schématique d'un terminal principal, apte à mettre en œuvre les étapes du procédé d'obtention d'un profil d'accès au réseau, selon un exemple de réalisation ;
- la figure 3 est une représentation schématique d'un terminal secondaire, apte à mettre en œuvre les étapes du procédé d'obtention d'un profil d'accès au réseau, selon un exemple de réalisation ;
- la figure 4 est une représentation schématique d'une entité réseau apte à mettre en œuvre les étapes du procédé d'obtention d'un profil d'accès au réseau, selon un exemple de réalisation.

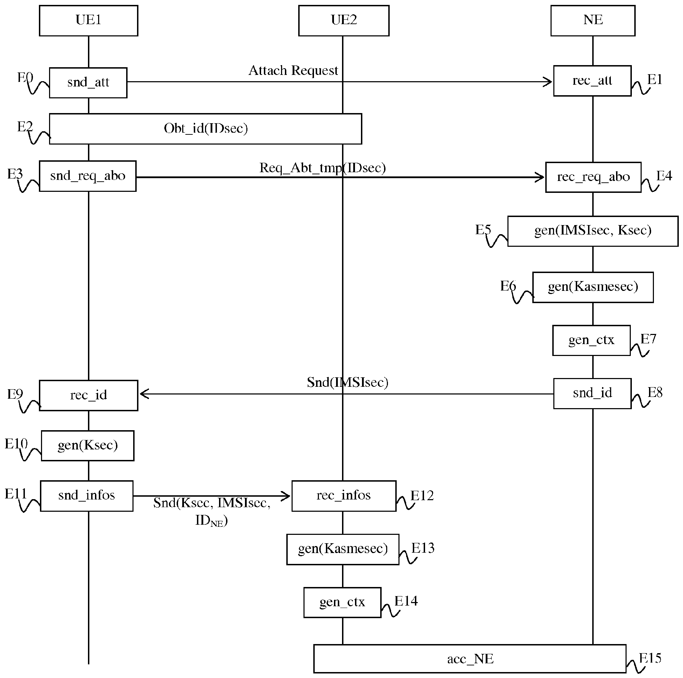

Les étapes d'un procédé d'obtention d'un profil d'accès à un réseau de communication par un terminal secondaire via un terminal principal, selon un exemple de réalisation, vont maintenant être décrites en relation avec la figure 1.

Un premier équipement utilisateur UE1, appelé par la suite « terminal principal UE1 », est agencé pour accéder à un réseau mobile de communication, représenté sur la figure 1 par une entité réseau NE. L'architecture classique d'un tel équipement utilisateur distingue habituellement un environnement d'exécution comprenant un système d'exploitation adapté pour l'exécution d'applications de l'utilisateur, un environnement d'exécution responsable des communications réseau et appelé « baseband », et un élément de sécurité (le terme habituellement utilisé est le terme anglais « Secure Element »). L'élément de sécurité est de type « UICC » (de l'anglais « Universai Integrated Circuit Card »), ou « eUICC » (pour « embedded », ou embarquée). Un exemple de module de sécurité est une carte « (U)SIM » (pour « (Universal) Suscriber Identity Module ») insérée dans un équipement mobile et utilisée en téléphonie mobile. L'élément de sécurité est agencé pour stocker et traiter des données sensibles, par exemple une application d'accès au réseau et des données d'authentification associées (on parle de « credentials » en anglais), telles que des clés et des algorithmes cryptographiques. De telles données sont destinées à être utilisées par un protocole d'authentification avec le réseau lors de l'accès à ce dernier. L'invention n'est pas limitée à un équipement utilisateur de ce type et dans un autre exemple de réalisation, l'élément de sécurité du terminal principal UE1 est une zone logicielle sécurisée agencée pour traiter les données sensibles d'accès au réseau. Le terminal principal UE1 est un équipement mobile grand public, par exemple un terminal intelligent de type smartphone, une tablette, etc. L'utilisateur du terminal principal UE1 possède un abonnement lui permettant d'accéder au réseau mobile de l'opérateur en charge de l'entité réseau NE. A cet effet le terminal principal UE1 comprend des données de sécurité qui permettent de générer un profil d'accès au réseau. Un profil d'accès au réseau comprend un ensemble de données qui permettent d'accéder au réseau de façon sécurisée. Plus précisément, le profil d'accès comprend au moins un identifiant du terminal principal UE1, un identifiant du réseau auquel il peut accéder grâce à son abonnement, et des données destinées à être utilisées lors de la phase d'authentification avec le réseau, telles qu'une une clé d'authentification, habituellement notée K dans un réseau EPS (pour « Evolved Packet Service »).

Un deuxième terminal utilisateur UE2, appelé par la suite « terminal secondaire UE2 », comprend un environnement d'exécution applicatif, adapté pour exécuter des applications utilisateur et un environnement d'exécution de type « baseband », responsable des communications réseau. Cependant, le terminal secondaire UE2 n'est, initialement, pas agencé pour accéder au réseau mobile représenté par l'entité réseau NE. Dans un premier exemple de réalisation, le terminal secondaire UE2 ne possède pas d'élément de sécurité.

L'entité réseau NE représente le réseau auquel le terminal principal UE1 accède au moyen de son abonnement. Une seule entité réseau NE est représentée sur la figure 1. Bien sûr, cette entité réalise des fonctionnalités qui peuvent être mises en œuvre par plusieurs dispositifs ou/et serveurs du réseau (non représentés sur la figure 1). Par exemple, dans le cas d'un réseau EPS, les dispositifs comprennent une station de base, agencée pour gérer la transmission et la réception radio avec le terminal principal UE1, une ou plusieurs entités de gestion de la mobilité, responsable(s) du contrôle dans le réseau, un serveur d'abonnés ou serveur d'authentification adapté pour authentifier les équipements utilisateurs qu'il gère, etc.

De manière classique, et à des fins d'accès au réseau, le module de sécurité du terminal principal UE1 mémorise une clé d'authentification, habituellement notée K, partagée avec l'entité réseau NE, plus précisément avec le serveur d'abonnés du réseau. La clé d'authentification K est destinée à être utilisée pour la génération de données d'authentification et pour dériver des clés telles qu'une clé maîtresse de session, habituellement notée Kasme, et des clés de chiffrement de la voie radio et de contrôle d'intégrité.

Dans une étape initiale E0 d'accès au réseau, le terminal principal UE1 émet sur la voie radio une requête d'attachement Attach Request qui fait partie d'une phase d'attachement au terme de laquelle le terminal principal UElest authentifié par le réseau NE. La requête d'attachement est reçue par l'entité réseau NE dans une étape E1 de réception. Cette phase d'attachement comprend un attachement physique au réseau, c'est-à-dire au niveau de la voie radio, puis une négociation de paramètres avec le réseau. La requête d'attachement comprend un identifiant du terminal principal UE1, par exemple un identifiant permanent appelé « IMSI » (de l'anglais « International Mobile Subscriber Identity »). L'IMSI est un numéro unique, stocké dans l'élément de sécurité, et qui permet au réseau mobile d'identifier le client en tant qu'abonné. Dans un but de simplification de la figure 1, seule la requête d'attachement au réseau est représentée pour schématiser la phase d'attachement, réputée connue. Au terme de la phase d'attachement, le terminal principal UE1 et le réseau NE sont authentifiés et partagent la connaissance d'une clé maîtresse de session, notée Kasme, et destinée à être utilisée pour dériver une hiérarchie de clés, dont une clé de chiffrement de la voie radio et une clé de contrôle d'intégrité.

Dans une étape suivante E2 d'obtention d'un identifiant, le terminal principal UE1 obtient un identifiant IDsec du terminal secondaire UE2. Dans un premier exemple de réalisation, l'identifiant IDsec du terminal secondaire UE2 est inscrit sur le terminal secondaire UE2, ou sur l'emballage du terminal secondaire UE2. Bien sûr, l'identifiant IDsec du terminal secondaire est également mémorisé dans le terminal secondaire UE2. Dans cet exemple, l'identifiant IDsec du terminal secondaire UE2 est une donnée constante. Dans un autre exemple de réalisation, le terminal secondaire UE2 comprend une application de génération de tickets. Un ticket est un identifiant du terminal secondaire UE2, sous forme d'une chaîne de caractères alphanumériques par exemple, généré pour une session courante. Un identifiant, tel qu'un ticket, à usage unique, contribue à la sécurité du procédé puisqu'il ne peut être utilisé qu'une fois. On peut imaginer à cet effet que l'entité réseau NE gère une base de données de tickets utilisés. Le ticket est par exemple fourni par l'application de génération de tickets sous forme d'un QR code (pour « Quick Response Code ») destiné à être scanné par le terminal principal UE1 au moyen d'un lecteur de code-barres. Dans cet exemple, l'identifiant IDsec du terminal secondaire UE2 peut varier. En tout état de cause, l'identifiant IDsec du terminal secondaire UE2 est considéré comme une donnée privée qui est destinée à n'être fournie par l'utilisateur du terminal secondaire UE2 que dans le cadre de l'obtention d'un profil d'accès au réseau à travers le terminal principal UE1.

Dans un exemple de réalisation, le terminal principal UE1 obtient l'identifiant IDsec du terminal secondaire UE2 en le scannant, s'il est sous forme d'un QR code ou s'il est imprimé sur le terminal secondaire UE2. Dans un autre exemple de réalisation, l'utilisateur saisit manuellement l'identifiant IDsec du terminal secondaire UE2 dans une zone de saisie du terminal principal UE1. A noter que l'on ne présuppose pas qu'une liaison de sécurité est établie entre le terminal principal UE1 et le terminal secondaire UE2 pour une transmission sécurisée de l'identifiant IDsec du terminal secondaire UE2 au terminal principal UE1. Cependant, comme dit précédemment, l'identifiant IDsec est une donnée privée qui n'est pas destinée à être divulguée. Ainsi, on privilégie l'obtention de l'identifiant IDsec du terminal secondaire UE2 par scan ou par saisie manuelle afin de limiter au maximum tout risque de vol de l'identifiant qui dans ce cas circule en clair. Par exemple, on évite l'utilisation de technologies sans fil de type NFC au cas où un attaquant serait à l'écoute de ce canal.

Dans une étape E3 d'envoi d'une requête d'abonnement temporaire, le terminal principal UE1 envoie à l'entité réseau NE une requête d'abonnement temporaire pour le terminal secondaire UE2. L'envoi de la requête d'abonnement temporaire est sécurisé ; il utilise à cette fin le chiffrement de la voie radio établi lors de la phase d'attachement au réseau du terminal principal UE1 au cours de l'étape E0. La requête d'abonnement temporaire comprend l'identifiant IDsec du terminal secondaire UE2 obtenu au cours de l'étape précédente E2. Dans un exemple de réalisation, la requête d'abonnement temporaire comprend aussi une durée d'abonnement destinée à préciser la durée de l'abonnement temporaire du terminal secondaire UE2. Dans un autre exemple de réalisation, l'absence de la durée d'abonnement dans la requête signifie qu'une durée par défaut, prévue par le réseau NE, est définie.

La requête d'abonnement temporaire est reçue par l'entité réseau NE dans une étape E4 de réception.

Dans une étape suivante E5 de génération d'un identifiant et d'une clé temporaires, l'entité réseau NE génère un identifiant temporaire IMSIsec et une clé secrète temporaire Ksec pour le terminal secondaire UE2. Cette clé temporaire secrète Ksec est propre au terminal secondaire. L'identifiant temporaire IMSIsec est généré conformément à un algorithme propre à l'opérateur qui a fourni l'abonnement à l'utilisateur du terminal principal UE1. La clé temporaire Ksec est générée à partir de l'identifiant temporaire IMSIsec du terminal secondaire UE2 et de la clé maîtresse de session Kasme générée lors de l'étape d'attachement au réseau du terminal principal UE1. On suppose qu'un algorithme de dérivation de clé KDF est utilisé à cet effet. Ainsi, Ksec = KDF(Kasme, IMSIsec).

Dans une étape suivante E6 de génération d'une clé maîtresse de session secondaire, l'entité réseau NE génère une clé maîtresse de session secondaire, notée Kasmesec, pour le terminal secondaire UE2. La clé maîtresse de session secondaire Kasmesec est générée à partir la clé temporaire Ksec, de l'identifiant IDsec du terminal secondaire UE2 reçu du terminal principal UE1 au cours de l'étape E4, et d'un identifiant ID_{NE} du réseau d'accès au réseau NE. L'entité réseau NE utilise à cet effet un algorithme de dérivation de clés noté KDF'. Ainsi, Kasmesec = KDF'(Ksec, IDsec, ID_{NE}). A noter qu'il n'y a pas de nouvelle authentification du terminal principal UE1 avec le réseau pour cette génération ; c'est la clé maîtresse de session Kasme du terminal principal UE1, générée pour son accès courant au réseau, qui est utilisée pour générer la clé temporaire Ksec et donc également la clé maîtresse de session secondaire Kasmesec du terminal secondaire UE2.

Dans une étape suivante E7 de création d'un contexte de sécurité, l'entité réseau NE crée un contexte de sécurité pour le terminal secondaire UE2. Le contexte de sécurité comprend des données de sécurité qui sont associées au terminal secondaire UE2. En particulier, le contexte de sécurité comprend la clé maîtresse de session secondaire Kasmesec du terminal secondaire UE2 ainsi que l'ensemble des clés nécessaires à une communication sécurisée entre le terminal secondaire UE2 et le réseau ; ces clés sont dérivées à partir de la clé maîtresse de session secondaire Kasmesec du terminal secondaire UE2. Dans un réseau EPS, un contexte de sécurité est créé lors de l'authentification d'un terminal par le réseau et est partagé par l'équipement utilisateur et le réseau. Ici, le contexte de sécurité du terminal secondaire UE2 est créé au niveau du réseau, pour le terminal secondaire UE2 après une authentification réussie du terminal principal UE1. Ainsi, la création du contexte de sécurité pour le terminal secondaire UE2 se fait conformément à des procédures éprouvées dans un environnement sécurisé que constitue le réseau. Par ailleurs, la création du contexte de sécurité n'implique pas d'échanges de messages entre le terminal secondaire UE2 et l'entité réseau NE ; il n'y a donc pas de charge supplémentaire pour le réseau. A noter qu'à ce stade, le terminal secondaire UE2 ne dispose pas encore de ce contexte de sécurité.

Dans une étape suivante E8 d'envoi, l'entité réseau NE envoie de façon sécurisée au terminal principal UE1 l'identifiant temporaire IMSIsec du terminal secondaire UE2 généré par l'entité réseau NE au cours de l'étape E5. L'identifiant temporaire IMSIsec est reçu par le terminal principal UE1 dans une étape E9 de réception. Cet envoi se fait de façon sécurisée. Plus précisément, la sécurisation repose sur le chiffrement de la voie radio établi lors de la phase d'attachement au réseau du terminal principal UE1 au cours de l'étape E0.

Dans une étape E10 de génération, le terminal principal UE1 génère la clé temporaire Ksec du terminal secondaire UE2 à partir de l'identifiant temporaire IMSIsec du terminal secondaire UE2 et de sa propre clé maîtresse de session Kasme, générée au cours de l'étape E0 d'attachement au réseau. Pour ce faire, le terminal principal UE1 utilise le même algorithme de diversification de clés KDF que celui utilisé par l'entité réseau NE au cours de l'étape E5. Ainsi, Ksec = KDF(Kasme, IMSIsec).

Dans une étape E11 d'envoi, le terminal principal UE1 envoie au terminal secondaire UE2 la clé temporaire Ksec qu'il a générée au cours de l'étape précédente, l'identifiant ID_{NE} du réseau d'accès au réseau représenté par l'entité NE et l'identifiant temporaire IMSIsec du terminal secondaire UE2 qu'il a reçu du réseau NE au cours de l'étape E9. L'identifiant du réseau ID_{NE} est destiné à permettre au terminal secondaire UE2 d'identifier le réseau qu'il va utiliser pour accéder au réseau NE. L'identifiant temporaire IMSIsec du terminal secondaire est destiné à être fourni par le terminal secondaire UE2 lors de son accès au réseau ; cet identifiant temporaire a été généré pour la session courante, il peut être utilisé par l'entité réseau NE à des fins par exemple de facturation en lien avec l'abonnement propre au terminal principal UE1. L'envoi de la clé temporaire Ksec, de l'identifiant du réseau ID_{NE} et de l'identifiant temporaire IMSIsec du terminal secondaire UE2 est réalisé sur un canal de communication en champ proche, par exemple en NFC (pour « Near Field Communication »), ou en BLE (pour « Buetooth Low Energy »). Si la clé temporaire Ksec est compromise durant cette étape, la sécurité du procédé n'est pas pour autant remise en cause. En effet, la connaissance de la clé temporaire Ksec du terminal secondaire UE2 ne suffit pas pour générer le profil d'accès au réseau du terminal secondaire UE2, il faut également connaître l'identifiant IDsec du terminal secondaire UE2, réputé privé. D'autre part, la clé temporaire Ksec n'est valable que pour une session courante, ce qui limite les éventuels effets d'une compromission. Le terminal secondaire UE2 reçoit la clé temporaire Ksec, l'identifiant du réseau ID_{NE} et l'identifiant temporaire IMSIsec dans une étape E12 de réception. Plus précisément, la réception de ces données indique au terminal secondaire son authentification auprès du réseau d'accès identifié et l'authentification du réseau d'accès auprès du terminal secondaire.

Au terme de l'étape E12 de réception, le terminal secondaire UE2 dispose d'un profil d'accès au réseau qui comprend l'identifiant temporaire IMSIsec du terminal secondaire UE2, la clé temporaire Ksec et l'identifiant ID_{NE} du réseau NE. Le profil est mémorisé par le terminal secondaire UE2.

Dans une étape suivante E13 de génération, le terminal secondaire UE2 génère la clé maîtresse de session secondaire Kasmesec au moyen de son identifiant IDsec, de la clé temporaire Ksec reçue du terminal principal UE1 et de l'identifiant ID_{NE} du réseau d'accès. Le terminal secondaire UE2 utilise le même algorithme de diversification de clés KDF' que celui utilisé par le réseau au cours de l'étape E6.

Dans une étape suivante E14 de génération d'un contexte de sécurité, le terminal secondaire UE2 génère la hiérarchie de clés nécessaire à un accès et à des échanges sécurisés avec le réseau de la même manière que le réseau a généré ce contexte de sécurité au cours de l'étape E7 de création de contexte de sécurité. Il utilise à cette fin la clé maîtresse de session secondaire Kasmesec du terminal secondaire UE2. Au terme de cette étape, le réseau NE et le terminal secondaire UE2 partagent la connaissance de l'ensemble des clés et données de sécurité nécessaires à une communication sécurisée entre le terminal secondaire UE2 et le réseau NE.

Dans une phase suivante E15 d'accès au réseau, non détaillée, le terminal secondaire UE2 est apte à accéder au réseau NE de manière sécurisée au moyen du profil d'accès au réseau et du contexte de sécurité générés précédemment. A noter qu'à la différence d'un accès classique à un réseau, par exemple à un réseau EPS, il n'y a pas de phase d'authentification entre le terminal secondaire UE2 et le réseau NE pour générer le profil d'accès au réseau et le contexte de sécurité, puisque ceux-ci ont déjà été générés par l'entité réseau NE et par le terminal secondaire UE2 via le terminal principal UE1. On estime donc que, du fait de la mise en œuvre des étapes décrites précédemment et qui ont conduit à la génération d'un profil et d'un contexte de sécurité, l'entité réseau NE et le terminal secondaire UE2 sont déjà mutuellement authentifiés. Cependant, l'attachement du terminal secondaire UE2 nécessite encore à ce stade un attachement physique au réseau, c'est-à-dire à un niveau radio. Cet attachement physique est représenté par l'étape E15.

Dans un exemple de réalisation, où une durée de l'abonnement temporaire est précisée dans la requête d'abonnement temporaire envoyée par le terminal principal UE1 au cours de l'étape E3, le réseau NE supervise cette durée. Ainsi, l'accès au réseau depuis le terminal secondaire UE2 peut être interrompu, à l'initiative du réseau NE, une fois la durée de l'abonnement écoulé.

Le procédé d'obtention d'un profil d'accès à un réseau tel que décrit précédemment, permet au terminal secondaire UE2 et à l'entité réseau NE de générer un profil d'accès qui permet au terminal secondaire UE2 d'accéder au réseau de façon sécurisée sans que des messages ne soient échangés directement entre le réseau et le terminal secondaire UE2, comme c'est le cas dans des procédures classiques d'accès à un réseau. La génération du profil d'accès se fait sous couvert du terminal principal UE1 qui déclenche cette génération par envoi d'une requête explicite à l'entité réseau NE d'abonnement temporaire pour le terminal secondaire UE2 et qui est un intermédiaire entre l'entité réseau NE et le terminal secondaire UE2 pour l'obtention du profil d'accès. Les données habituellement nécessaires pour la génération d'un tel profil, en l'espèce une clé d'authentification et un identifiant d'abonnement, habituellement mémorisés dans un élément de sécurité, sont ici générées dans le réseau pour une session courante.

Le procédé n'impose pas d'avoir établi un lien sécurisé entre le terminal principal UE1 et le terminal secondaire UE2. Pour autant, le procédé est sécurisé car il repose sur un contexte de sécurité déjà existant entre le terminal principal UE1 et le réseau NE. Par ailleurs, des opérations délicates d'un point de vue sécurité sont mises en œuvre dans le réseau, en l'espèce la génération de la clé temporaire Ksec du terminal secondaire UE2. La génération et l'utilisation de la clé temporaire Ksec pour la session courante contribuent à la sécurisation du procédé dans le sens où, si la clé temporaire Ksec est compromise, il n'est pas pour autant possible de l'utiliser pour accéder au réseau. En effet, la seule connaissance de la clé temporaire Ksec ne suffit pas pour générer la clé maîtresse de session secondaire Kasmesec du terminal secondaire UE2 et la hiérarchie de clés utilisée pour accéder au réseau. L'identifiant IDsec du terminal secondaire UE2 est nécessaire pour générer la clé maîtresse de session secondaire Kasmesec du terminal secondaire UE2 et cet identifiant n'est pas transmis dans le réseau.

Le procédé décrit ici permet à un terminal utilisateur, en l'espèce le terminal secondaire UE2, d'accéder au réseau sans qu'une phase d'authentification telle qu'EPS AKA (pour « Authentication Key Agreement ») soit mise en œuvre. Cela diminue la charge du réseau.

Avec le procédé décrit, c'est le réseau qui, en ayant la responsabilité de générer des clés et un contexte de sécurité pour le terminal secondaire UE2, protège l'accès à son réseau.

Le procédé permet par ailleurs de lutter contre le clonage de données d'authentification, ou credentials, puisque les clés qui permettent au terminal secondaire UE2 d'accéder au réseau sont générées par et dans le réseau, pour une session courante. Elles ne sont donc pas pérennes.

Le profil d'accès au réseau qui a été généré par l'intermédiaire du terminal principal UE1 n'implique pas de dépendance d'un point de vue connexion, du terminal secondaire UE2 vis-à-vis du terminal principal UE1. En effet, une fois le profil d'accès généré et partagé entre le terminal secondaire UE2 et le réseau NE, l'accès du terminal secondaire au réseau peut se faire indépendamment du terminal principal UE1. Ainsi, il n'y a pas de nécessité, pour le terminal secondaire UE2, d'être à proximité géographique du terminal principal UE1. Il n'y a pas de nécessité non plus que le terminal principal UE1 soit allumé et/ou chargé, contrairement aux contraintes induites par un accès au réseau basé sur l'utilisation du terminal principal UE1 en tant que modem (le terme anglais « tethering » est habituellement utilisé).

Le procédé d'obtention d'un profil d'accès à un réseau tel que décrit précédemment permet à un opérateur de réseau d'offrir à ses clients, à la demande, un accès au réseau sécurisé et immédiat pour des dispositifs qui ne possèdent pas de module de sécurité et de données associées. Par exemple, il est possible de demander un profil d'accès au réseau pour un dispositif « IoT » (de l'anglais « Internet of Things »), de type objet connecté, qui n'est pas équipé d'un module de sécurité. Celui-ci accède alors au réseau, pour transmettre des données de mesure via le réseau Internet sans que le terminal qui a fait la requête initiale d'abonnement temporaire ne soit présent. Les données mesurées peuvent être des données de santé : un utilisateur obtient un profil pour sa montre connectée qui transmet au fur et à mesure des mesures physiques de l'utilisateur lors d'une épreuve sportive. Les données mesurées peuvent être relatives à un réseau domotique, etc.

Dans l'exemple de réalisation et les cas d'usage décrits ci-dessus, le terminal secondaire UE2 ne possède pas d'élément de sécurité. L'invention n'est pas limitée à ce cas et dans un autre exemple de réalisation, le terminal secondaire UE2 comprend un élément de sécurité qui comprend des données d'authentification qui ne sont pas adaptées pour accéder au réseau mobile NE. Dans ce cas, le terminal principal peut demander un abonnement temporaire pour le terminal secondaire UE2 afin que celui-ci accède au réseau NE.

Dans un autre exemple de réalisation, le terminal secondaire UE2 possède un élément de sécurité et un abonnement valide mais cet abonnement est limité ; par exemple il ne permet pas à l'utilisateur d'accéder au réseau de données. Dans ce cas, un utilisateur du terminal principal UE1 peut demander la génération d'un profil d'accès au réseau pour un terminal secondaire afin d'offrir à celui-ci un accès réseau temporaire plus étendu que celui dont il dispose initialement. Ce cas d'usage correspond par exemple à un parent qui demande la génération d'un profil d'accès au réseau de données pour le terminal mobile de son enfant, qui initialement n'est pas configuré pour accéder au réseau de données.

Le procédé d'obtention d'un profil d'accès au réseau est illustré ici dans le cadre d'un réseau de type EPS. L'invention n'est cependant pas limitée à ce type de réseau et s'applique également à d'autres types de réseaux mobiles, tels que par exemple le réseau « GPRS » (de l'anglais «General Packet Radio Service »), ou «UMTS» (de l'anglais « Universai Mobile Télécommunications System »), ou des réseaux en cours de définition, tels que le réseau 5G.

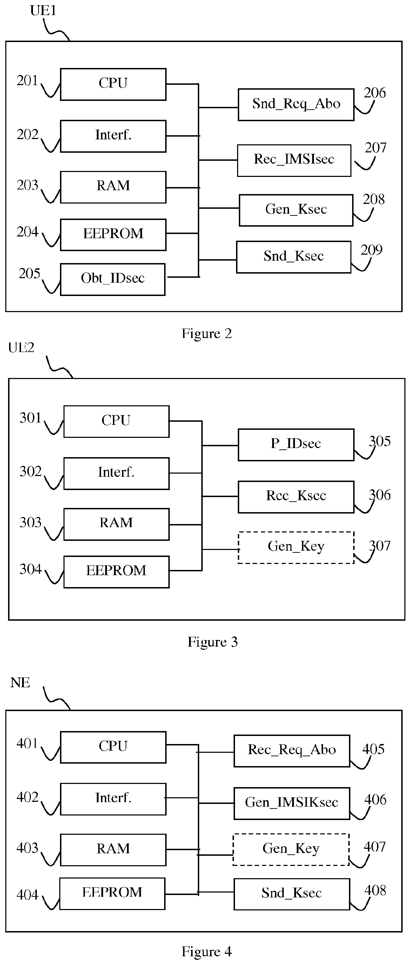

Un terminal principal UE1 selon un exemple de réalisation, va maintenant être décrit en relation avec la figure 2.

Un terminal principal UE1 est un équipement utilisateur qui comprend habituellement un environnement d'exécution pour des applications utilisateur et un environnement d'exécution en charge des communications réseau, ou « baseband », ainsi qu'un élément de sécurité. L'élément de sécurité est agencé pour stocker et traiter des données sensibles, telles que des clés et des algorithmes cryptographiques. De telles données et algorithmes sont destinés à être utilisés lors d'une phase d'attachement du terminal principal UE1 à un réseau de communication NE, et notamment au cours de la procédure d'authentification entre le terminal principal UE1 et le réseau NE. Les interactions entre les environnements d'exécution et le module de sécurité étant très étroites lors d'un accès du terminal principal UE1 au réseau NE et pour des raisons de lisibilité, on ne distingue pas dans la suite, l'élément de sécurité de ces environnements d'exécution qui sont ainsi regroupés dans le terminal principal UE1.

L'invention n'est pas limitée à un équipement utilisateur de ce type et dans un autre exemple de réalisation, l'élément de sécurité du terminal principal UE1 est sous forme d'une zone logicielle sécurisée agencée pour traiter les données sensibles d'accès au réseau.

Dans l'exemple décrit ici, le terminal principal UE1 comprend :
- une unité de traitement 201, ou CPU, agencée pour exécuter des instructions de code ;
- une interface radio 202, agencée pour s'interfacer avec le réseau mobile de communication ;
- un ensemble de mémoires, dont une mémoire volatile 203 de type RAM, utilisée pour exécuter des instructions de code, stocker des variables, etc., et une mémoire de stockage 204 de type mémoire flash ou EEPROM. La mémoire de stockage 204 est agencée pour mémoriser des données et des applications. En particulier, la mémoire de stockage 204 mémorise un module logiciel d'aide à l'obtention d'un profil d'accès au réseau pour un terminal secondaire UE2 (non représenté sur la figure 2) agencé pour mettre en œuvre celles des étapes du procédé d'obtention d'un profil d'accès à un réseau décrit précédemment qui sont mises en œuvre par le terminal principal UE1. La mémoire de stockage 204 mémorise également une clé d'authentification, habituellement notée K, un identifiant ID_{NE} du réseau d'accès au réseau NE auquel il accède, et appelé habituellement «réseau nominal », et un identifiant du terminal principal UE1, par exemple un identifiant permanent de type IMSI. La clé d'authentification K est partagée avec le réseau NE et est utilisée pour générer, au niveau du réseau et au niveau du terminal principal UE1 au moins une clé maîtresse de session, notée Kasme, propre au terminal principal UE1 et destinée à être utilisée pour la génération d'une hiérarchie de clés pour établir une communication sécurisée entre le réseau et le terminal principal UE1. Bien sûr, on comprend que la zone de la mémoire de stockage 204 qui comprend la clé d'authentification K, l'identifiant ID_{NE} du réseau d'accès au réseau et l'identifiant IMSI du terminal principal UE1 est comprise dans l'élément de sécurité.

Le terminal principal UE1 comprend également :
- un module 205 d'obtention d'un identifiant, agencé pour obtenir un identifiant IDsec du terminal secondaire UE2. Dans un exemple de réalisation, le module 205 d'obtention d'un identifiant est un lecteur de QR code. Dans un autre exemple de réalisation, correspondant au cas d'une saisie manuelle de l'identifiant du terminal secondaire UE2, le module d'obtention 205 comprend un clavier et un module de saisie. Le module 205 d'obtention d'un identifiant du terminal secondaire UE2 est agencé pour mettre en œuvre l'étape E2 d'obtention d'un identifiant du procédé d'obtention d'un profil d'accès à un réseau tel que décrit précédemment ;
- un module 206 d'envoi d'une requête d'abonnement temporaire, agencé pour envoyer au réseau NE une requête d'abonnement temporaire pour le terminal secondaire UE2, ladite requête comprenant l'identifiant IDsec du terminal secondaire. Le module 206 d'envoi est agencé pour mettre en œuvre l'étape E3 du procédé d'obtention d'un profil d'accès à un réseau tel que décrit précédemment ;
- un module de réception 207, agencé pour recevoir, en provenance du réseau, un identifiant temporaire IMSIsec du terminal secondaire UE2, ledit identifiant étant généré par le réseau. Le module de réception 207 est agencé pour mettre en œuvre l'étape E9 du procédé d'obtention d'un profil d'accès à un réseau tel que décrit précédemment ;
- un module 208 de génération, agencé pour générer une clé temporaire Ksec propre au terminal secondaire UE2. La clé temporaire Ksec est générée à partir de la clé maîtresse de session Kasme du terminal principal et de l'identifiant temporaire IMSIsec du terminal secondaire UE2 reçu du réseau. Le module 208 de génération est agencé pour mettre en œuvre l'étape E10 du procédé d'obtention d'un profil d'accès à un réseau tel que décrit précédemment ;
- un module d'envoi 209, agencé pour envoyer au terminal secondaire UE2 la clé temporaire Ksec et l'identifiant ID_{NE} du réseau d'accès au réseau NE. Le module d'envoi 209 est agencé pour mettre en œuvre l'étape E11 du procédé d'obtention d'un profil d'accès à un réseau tel que décrit précédemment.

Les modules 205 d'un identifiant du terminal secondaire UE2, 206 d'envoi d'une requête d'abonnement temporaire, 207 de réception, 208 de génération et 209 d'envoi sont de préférence des modules logiciels comprenant des instructions logicielles pour mettre en œuvre les étapes du procédé d'obtention d'un profil d'accès au réseau de communication pour un terminal secondaire via le terminal qui sont exécutées par le terminal principal UE1. L'invention concerne donc aussi :
- un programme d'ordinateur comportant des instructions pour la mise en œuvre du procédé d'obtention d'un profil d'accès au réseau de communication tel que décrit précédemment lorsque ce programme est exécuté par un processeur du terminal principal UE1, et
- un support d'enregistrement lisible sur lequel est enregistré le programme d'ordinateur décrit ci-dessus.

Un terminal secondaire UE2, selon un exemple de réalisation, va maintenant être décrit en relation avec la figure 3.

Un terminal secondaire UE2 est un équipement utilisateur qui comprend habituellement un environnement d'exécution pour des applications utilisateur et des capacités radio sous forme d'un environnement d'exécution en charge des communications réseau, ou « baseband ». Dans un exemple de réalisation, le terminal secondaire UE2 ne possède pas d'élément de sécurité et de données de sécurité associées lui permettant d'accéder au réseau NE. Dans un autre exemple de réalisation, le terminal secondaire UE2 possède un élément de sécurité. Cependant, dans ce cas, les données de sécurité que ce module comprend ne permettent pas un accès au réseau comparable à un accès mis en œuvre grâce au profil d'accès au réseau obtenu via le terminal principal UE1.

Dans l'exemple décrit ici, le terminal secondaire UE2 comprend :
- une unité de traitement 301, ou CPU, agencée pour exécuter des instructions de code ;
- une interface radio 302, agencée pour s'interfacer avec le réseau mobile de communication ;
- un ensemble de mémoires, dont une mémoire volatile 303 de type RAM, utilisée pour exécuter des instructions de code, stocker des variables, etc., et une mémoire de stockage 304 de type mémoire flash ou EEPROM. La mémoire de stockage 304 est agencée pour mémoriser des données et des applications. En particulier, la mémoire de stockage 304 mémorise un module logiciel d'obtention d'un profil d'accès au réseau via le terminal principal UE1 (non représenté sur la figure 3) agencé pour mettre en œuvre celles des étapes du procédé d'obtention d'un profil d'accès à un réseau décrit précédemment qui sont mises en œuvre par le terminal secondaire UE2. La mémoire de stockage 304 mémorise également un identifiant IDsec du terminal secondaire UE2.

Le terminal secondaire UE2 comprend également :
- un module 305 de fourniture au terminal principal UE1 d'un identifiant IDsec du terminal secondaire UE2. Dans un exemple de réalisation, le module de fourniture 305 est une application de génération d'identifiants, ou tickets. L'identifiant généré est par exemple sous forme d'une chaîne de caractères alphanumériques. Dans un autre exemple de réalisation, le module 305 de fourniture est une zone de lecture, qui figure sur le terminal secondaire UE2 et qui comprend l'identifiant mémorisé dans le terminal secondaire UE2. Le module 305 de fourniture d'un identifiant est agencé pour mettre en œuvre l'étape E2 du procédé d'obtention d'un profil d'accès à un réseau de communication, tel que décrit précédemment ;
- un module 306 de réception, agencé pour recevoir, en provenance du terminal principal UE1, une clé temporaire Ksec, un identifiant temporaire IMSIsec du terminal secondaire UE2 et un identifiant ID_{NE} du réseau d'accès au réseau NE. La clé temporaire Ksec est générée à partir de l'identifiant temporaire IMSIsec du terminal secondaire, généré par le réseau et d'une clé maîtresse de session Kasme propre au terminal principal UE1. La clé maîtresse de session Kasme est générée d'une part par le réseau et d'autre part par le terminal principal UE1 à partir de la clé d'authentification K partagée entre le réseau et le terminal principal UE1, et mémorisée dans le module de sécurité du terminal principal UE1. La clé temporaire Ksec, l'identifiant temporaire IMSIsec, l'identifiant IDsec du terminal secondaire et l'identifiant ID_{NE} du réseau d'accès au réseau sont compris dans le profil d'accès au réseau du terminal secondaire UE2. Le module 306 de réception est agencé pour mettre en œuvre l'étape E12 du procédé d'obtention d'un profil d'accès à un réseau de communication, tel que décrit précédemment ;
- un module 307 de génération, agencé pour générer une clé maîtresse de session secondaire Kasmesec, propre au terminal secondaire UE2, à partir de la clé temporaire Ksec, de l'identifiant IDsec du terminal secondaire, et de l'identifiant ID_{NE} du réseau d'accès. A noter que le module 307 de génération est optionnel pour l'obtention d'un profil d'accès au réseau. Il apparaît en pointillés sur la figure 3. Il est cependant essentiel pour l'accès au réseau par le terminal secondaire UE2. Le module 307 de génération est agencé pour mettre en œuvre l'étape E13 du procédé d'obtention d'un profil d'accès à un réseau de communication, tel que décrit précédemment.

Les modules 305 de fourniture d'un identifiant du terminal secondaire, 306 de réception et 307 de génération sont de préférence des modules logiciels comprenant des instructions logicielles pour mettre en œuvre les étapes du procédé d'obtention d'un profil d'accès au réseau de communication pour un terminal secondaire via un terminal principal qui sont exécutées par le terminal secondaire UE2.

L'invention concerne donc aussi :
- un programme d'ordinateur comportant des instructions pour la mise en œuvre du procédé d'obtention d'un profil d'accès au réseau de communication tel que décrit précédemment lorsque ce programme est exécuté par un processeur du terminal secondaire UE1, et
- un support d'enregistrement lisible sur lequel est enregistré le programme d'ordinateur décrit ci-dessus.

Une entité réseau NE, selon un exemple de réalisation, va maintenant être décrite en relation avec la figure 4.

L'entité réseau NE est par exemple un serveur du réseau. Elle comprend :
- une unité de traitement 401, ou CPU, agencée pour exécuter des instructions de code ;
- une interface radio 402, agencée pour s'interfacer avec des terminaux mobiles ;
- un ensemble de mémoires, dont une mémoire volatile 403 de type RAM, utilisée pour exécuter des instructions de code, stocker des variables, etc., et une mémoire de stockage 404 de type mémoire flash ou EEPROM. La mémoire de stockage 404 est agencée pour mémoriser des données et des applications. En particulier, la mémoire de stockage 404 mémorise un module logiciel de génération obtention génération d'un profil d'accès à un réseau de communication représenté par l'entité réseau NE pour un terminal secondaire UE2 via un terminal principal UE1 (non représentés sur la figure 4). Le module logiciel est agencé pour mettre en œuvre celles des étapes du procédé d'obtention d'un profil d'accès à un réseau décrit précédemment qui sont mises en œuvre par l'entité réseau NE.

L'entité réseau NE comprend également :
- un module 405 de réception, agencé pour recevoir en provenance du terminal principal UE1, une requête d'abonnement temporaire pour le terminal secondaire UE2, ladite requête comprenant un identifiant IDsec du terminal secondaire UE2. Dans un exemple de réalisation, la requête d'abonnement temporaire comprend une durée de l'abonnement. Le module 405 de réception est agencé pour mettre en œuvre l'étape E4 de réception d'une requête d'abonnement temporaire du procédé d'obtention d'un profil d'accès au réseau tel que décrit précédemment ;
- un module 406 de génération d'un identifiant temporaire et d'une clé temporaire, agencé pour générer un identifiant temporaire IMSIsec et une clé temporaire Ksec du terminal secondaire UE2, ladite clé temporaire étant générée à partir de l'identifiant temporaire du terminal secondaire et de la clé maîtresse Kasme de session du terminal principal. La clé maîtresse de session Kasme est générée d'une part par le réseau et d'autre part par le terminal principal UE1 à partir de la clé d'authentification K partagée entre le réseau et le terminal principal UE1, et mémorisée dans le module de sécurité du terminal principal UE1. La clé temporaire Ksec, l'identifiant temporaire IMSIsec, l'identifiant IDsec du terminal secondaire, et un identifiant ID_{NE} du réseau d'accès au réseau sont compris dans un profil d'accès au réseau du terminal secondaire UE2. Le module 406 de génération est agencé pour mettre en œuvre l'étape E5 de génération du procédé d'obtention d'un profil d'accès au réseau tel que décrit précédemment ;

- un module 407 de génération d'une clé maîtresse de session secondaire, agencé pour générer une clé maîtresse de session secondaire Kasmesec à partir de la clé temporaire Ksec et de l'identifiant IDsec du terminal secondaire, la clé maîtresse de session secondaire, l'identifiant temporaire du terminal secondaire et l'identifiant ID_{NE} du réseau d'accès au réseau NE étant compris dans un profil d'accès au réseau du terminal secondaire. Le module 407 de génération d'une clé maîtresse de session secondaire est optionnel pour l'obtention d'un profil d'accès au réseau. Il apparaît en pointillés sur la figure. Il est cependant essentiel pour l'accès au réseau. Le module 407 de génération d'une clé maîtresse de session secondaire est agencé pour mettre en œuvre l'étape E6 de génération du procédé d'obtention d'un profil d'accès au réseau tel que décrit précédemment ;
- un module d'envoi 408, agencé pour envoyer au terminal principal l'identifiant temporaire du terminal secondaire Le module 408 d'envoi est agencé pour mettre en œuvre l'étape E8 d'envoi du procédé d'obtention d'un profil d'accès au réseau tel que décrit précédemment.

Les modules 405 de réception, 406 de génération d'un identifiant temporaire et d'une clé temporaire, 407 de génération d'une clé maîtresse de session secondaire et 408 d'envoi de l'identifiant temporaire du terminal secondaire sont de préférence des modules logiciels comprenant des instructions logicielles pour mettre en œuvre les étapes du procédé d'obtention d'un profil d'accès au réseau de communication pour un terminal secondaire via un terminal principal qui sont exécutées par l'entité réseau NE.

L'invention concerne donc aussi :
- un programme d'ordinateur comportant des instructions pour la mise en œuvre du procédé d'obtention d'un profil d'accès au réseau de communication tel que décrit précédemment lorsque ce programme est exécuté par un processeur de l'entité réseau NE, et
- un support d'enregistrement lisible sur lequel est enregistré le programme d'ordinateur décrit ci-dessus.

L'invention concerne aussi un système d'obtention d'un profil d'accès à un réseau de communication. Ce système comprend au moins un terminal principal UE1, un terminal secondaire UE2 et une entité réseau NE tels que décrits précédemment. Un tel système est agencé pour mettre en œuvre les étapes du procédé d'obtention d'un profil d'accès au réseau tel que décrit précédemment.

## Revendications

1. Procédé d'obtention d'un profil d'accès à un réseau de communication (NE) par un terminal secondaire (UE2) via un terminal principal (UE1), le terminal principal comprenant un élément de sécurité comprenant une clé d'authentification, ladite clé d'authentification étant utilisée par le réseau et par le terminal principal pour générer au moins une clé maîtresse de session (Kasme) propre au terminal principal, le procédé, mis en œuvre par le terminal secondaire, comprenant :
- fourniture (E2) au terminal principal d'un identifiant (IDsec) du terminal secondaire,
- réception (E12) en provenance du terminal principal de données comprenant une clé temporaire (Ksec) propre au terminal secondaire, un identifiant temporaire (IMSIsec) du terminal secondaire, et un identifiant (ID_{NE}) du réseau d'accès au réseau, ladite clé temporaire, l'identifiant du réseau et l'identifiant du terminal secondaire étant destinés à calculer une clé maîtresse de session secondaire partagée avec le réseau, ladite clé temporaire étant générée à partir de l'identifiant temporaire du terminal secondaire (IMSIsec) généré par le réseau et de la clé maîtresse de session (Kasme) du terminal principal, le profil d'accès au réseau du terminal secondaire comprenant la clé temporaire (Ksec), l'identifiant temporaire (IMSIsec), l'identifiant (IDsec) du terminal secondaire et l'identifiant (ID_{NE}) du réseau d'accès ,
la réception de ces données indiquant au terminal secondaire son authentification auprès du réseau d'accès identifié et l'authentification dudit réseau d'accès auprès du terminal secondaire.

2. Procédé selon la revendication précédente, comprenant :
- génération (E13) d'une clé maîtresse de session secondaire (Kasmesec) propre au terminal secondaire à partir de la clé temporaire (Ksec) et de l'identifiant (IDsec) du terminal secondaire.

3. Procédé d'aide à l'obtention d'un profil d'accès à un réseau de communication (NE) par un terminal secondaire (UE2) via un terminal principal (UE1), le terminal principal comprenant un module de sécurité comprenant une clé d'authentification, ladite clé d'authentification étant utilisée par le réseau et par le terminal principal pour générer au moins une clé maîtresse de session (Kasme) propre au terminal principal, le procédé, mis en œuvre par le terminal principal, comprenant :
- obtention (E2) d'un identifiant (IDsec) du terminal secondaire,
- envoi (E3) au réseau (NE) d'une requête d'abonnement temporaire pour le terminal secondaire, ladite requête comprenant l'identifiant (IDsec) du terminal secondaire,
- réception (E9), en provenance du réseau, d'un identifiant temporaire (IMSIsec) du terminal secondaire généré par le réseau,
- génération (E10) d'une clé temporaire (Ksec) propre au terminal secondaire, à partir de la clé maîtresse de session du terminal principal (Kasme) et de l'identifiant temporaire (IMSIsec) du terminal secondaire,
- envoi (E11) au terminal secondaire de la clé temporaire (Ksec) et de l'identifiant temporaire (IMSIsec) du terminal secondaire, et d'un identifiant (ID_{NE}) du réseau d'accès au réseau.

4. Procédé selon la revendication 3 dans lequel la requête d'abonnement temporaire pour le terminal secondaire comprend une durée de l'abonnement.

5. Procédé de génération d'un profil d'accès à un réseau de communication (NE) pour un terminal secondaire (UE2) via un terminal principal (UE1), le terminal principal comprenant un module de sécurité comprenant une clé d'authentification, ladite clé d'authentification étant utilisée par le réseau et par le terminal principal pour générer au moins une clé maitresse de session (Kasme) propre au terminal principal, le procédé mis en œuvre par le réseau comprenant :
- réception (E4), en provenance du terminal principal, d'une requête d'abonnement temporaire pour le terminal secondaire, ladite requête comprenant un identifiant (IDsec) du terminal secondaire,
- génération (E5) d'un identifiant temporaire (IMSIsec) et d'une clé temporaire (Ksec) propre au terminal secondaire, ladite clé temporaire (Ksec) étant générée à partir de l'identifiant temporaire (IMSIsec) du terminal secondaire et de la clé maîtresse de session (Kasme) du terminal principal, le profil d'accès au réseau du terminal secondaire comprenant la clé temporaire (Ksec), l'identifiant temporaire (IMSIsec), l'identifiant (IDsec) du terminal secondaire, et un identifiant (ID_{NE}) du réseau d'accès au réseau ,
- envoi (E8) au terminal principal de l'identifiant temporaire (IMSIsec) du terminal secondaire.

6. Procédé selon la revendication précédente, comprenant :
- génération (E6) d'une clé maîtresse de session secondaire (Kasmesec) propre au terminal secondaire à partir de la clé temporaire (Ksec) et de l'identifiant (IDsec) du terminal secondaire.

7. Terminal secondaire (UE2) agencé pour obtenir un profil d'accès à un réseau de communication (NE) via un terminal principal (UE1), le terminal principal comprenant un élément de sécurité comprenant une clé d'authentification, ladite clé d'authentification étant utilisée par le réseau et par le terminal principal pour générer au moins une clé maîtresse de session (Kasme) propre au terminal principal, le terminal secondaire comprenant :
- des moyens (305) de fourniture, agencés pour fournir au terminal principal un identifiant (IDsec) du terminal secondaire,
- des moyens (306) de réception, agencés pour recevoir en provenance du terminal principal des données comprenant une clé temporaire (Ksec) propre au terminal secondaire, un identifiant temporaire (IMSIsec) du terminal secondaire, et un identifiant (ID_{NE}) du réseau d'accès au réseau, ladite clé temporaire, l'identifiant du réseau et l'identifiant du terminal secondaire étant destinés à calculer une clé maîtresse de session secondaire partagée avec le réseau, ladite clé temporaire (Ksec) étant générée à partir de l'identifiant temporaire (IMSIsec) du terminal secondaire généré par le réseau et de la clé maîtresse de session (Kasme) du terminal principal, le profil d'accès au réseau du terminal secondaire comprenant la clé temporaire (Ksec), l'identifiant temporaire (IMSIsec), l'identifiant (IDsec) du terminal secondaire et l'identifiant (ID_{NE}) du réseau d'accès , la réception de ces données indiquant au terminal secondaire son authentification auprès du réseau d'accès identifié et l'authentification dudit réseau d'accès auprès du terminal secondaire.

8. Terminal secondaire selon la revendication précédente, comprenant des moyens (307) de génération, agencés pour générer une clé maîtresse de session secondaire (Kasmesec) propre au terminal secondaire à partir de la clé temporaire (Ksec) et de l'identifiant (IDsec) du terminal secondaire.

9. Programme pour un terminal, comprenant des instructions de code de programme destinées à commander l'exécution des étapes du procédé d'obtention d'un profil d'accès à un réseau de communication, selon la revendication 1 ou la revendication 2, lorsque le programme est exécuté sur ledit terminal.

10. Terminal principal (UE1) agencé pour aider à l'obtention d'un profil d'accès à un réseau de communication (NE) par un terminal secondaire (UE2), le terminal principal comprenant un module de sécurité comprenant une clé d'authentification, ladite clé d'authentification étant utilisée par le réseau et par le terminal principal pour générer au moins une clé maîtresse de session (Kasme) propre au terminal principal, le terminal principal comprenant :
- des moyens d'obtention (205), agencés pour obtenir un identifiant (IDsec) du terminal secondaire,
- des premiers moyens d'envoi (206), agencés pour envoyer au réseau une requête d'abonnement temporaire pour le terminal secondaire, ladite requête comprenant l'identifiant (IDsec) du terminal secondaire,
- des moyens de réception (207), agencés pour recevoir en provenance du réseau un identifiant temporaire (IMSIsec) du terminal secondaire généré par le réseau,
- des moyens de génération (208), agencés pour générer une clé temporaire (Ksec) propre au terminal secondaire, ladite clé temporaire étant générée à partir la clé maîtresse de session (Kasme) du terminal principal et de l'identifiant temporaire (IMSIsec) du terminal secondaire,
- des deuxièmes moyens d'envoi (209), agencés pour envoyer au terminal secondaire la clé temporaire (Ksec), l'identifiant temporaire (IMSIsec) et un identifiant (ID_{NE}) du réseau d'accès au réseau.

11. Programme pour un terminal, comprenant des instructions de code de programme destinées à commander l'exécution des étapes du procédé d'aide à l'obtention d'un profil d'accès à un réseau de communication par un terminal secondaire (UE2) via le terminal utilisateur, selon la revendication 3 ou la revendication 4, lorsque le programme est exécuté sur ledit terminal.

12. Dispositif (NE) d'un réseau de communication, agencé pour générer un profil d'accès à un réseau de communication pour un terminal secondaire (UE2) via un terminal principal (UE1), le terminal principal comprenant un module de sécurité comprenant une clé d'authentification, ladite clé d'authentification étant utilisée par le réseau et par le terminal principal pour générer au moins une clé maitresse de session (Kasme) propre au terminal principal, le dispositif comprenant :
- des moyens de réception (405), agencés pour recevoir, en provenance du terminal principal, une requête d'abonnement temporaire pour le terminal secondaire, ladite requête comprenant un identifiant (IDsec) du terminal secondaire,
- des premiers moyens de génération (406), agencés pour générer un identifiant temporaire (IMSIsec) et une clé temporaire (Ksec) propre au terminal secondaire, ladite clé temporaire (Ksec) étant générée à partir de l'identifiant temporaire (IMSIsec) du terminal secondaire et de la clé maîtresse de session (Kasme) du terminal principal, le profil d'accès au réseau du terminal secondaire comprenant la clé temporaire (Ksec), l'identifiant temporaire (IMSIsec), l'identifiant (IDsec) du terminal secondaire et un identifiant (ID_{NE}) du réseau d'accès au réseau,
- des moyens d'envoi (408), agencés pour envoyer au terminal principal l'identifiant temporaire du terminal secondaire.

13. Dispositif selon la revendication précédente, comprenant des deuxièmes moyens de génération (407), agencés pour générer une clé maîtresse de session secondaire (Kasmesec) propre au terminal secondaire à partir de la clé temporaire et de l'identifiant du terminal secondaire, un profil d'accès au réseau du terminal secondaire comprenant la clé maîtresse de session secondaire, l'identifiant temporaire du terminal secondaire et un identifiant du réseau..

14. Programme pour un dispositif d'un réseau de communication, comprenant des instructions de code de programme destinées à commander l'exécution des étapes d'un procédé de génération d'un profil d'accès à un réseau de communication pour un terminal secondaire via un terminal principal, selon la revendication 5, lorsque le programme est exécuté sur ledit dispositif.

15. Système d'obtention d'un profil d'accès à un réseau de communication par un terminal secondaire via un terminal principal comprenant :
- un dispositif (NE) selon la revendication 12 ou la revendication 13,
- un terminal principal (UE1) d'utilisateur selon la revendication 10, et au moins un terminal secondaire (UE2) selon la revendication 7 ou la revendication 8.

## Patentansprüche

1. Verfahren zur Erlangung eines Zugangsprofils zu einem Kommunikationsnetz (NE) durch ein sekundäres Endgerät (UE2) über ein Hauptendgerät (UE1), wobei das Hauptendgerät ein einen Authentifizierungsschlüssel enthaltendes Sicherheitselement enthält, wobei der Authentifizierungsschlüssel vom Netz und vom Hauptendgerät verwendet wird, um mindestens einen dem Hauptendgerät eigenen Sitzungshauptschlüssel (Kasme) zu generieren, wobei das vom sekundären Endgerät durchgeführte Verfahren enthält:
- Liefern (E2) einer Kennung (IDsec) des sekundären Endgeräts an das Hauptendgerät,
- Empfang (E12) von Daten vom Hauptendgerät, die einen dem sekundären Endgerät eigenen temporären Schlüssel (Ksec), eine temporäre Kennung (IMSIsec) des sekundären Endgeräts und eine Kennung (ID_{NE}) des Zugangsnetzes zum Netz enthalten, wobei der temporäre Schlüssel, die Kennung des Netzes und die Kennung des sekundären Endgeräts dazu bestimmt sind, einen mit dem Netz geteilten sekundären Sitzungshauptschlüssel zu berechnen, wobei der temporäre Schlüssel ausgehend von der vom Netz generierten temporären Kennung des sekundären Endgeräts (IMSIsec) und vom Sitzungshauptschlüssel (Kasme) des Hauptendgeräts generiert wird, wobei das Zugangsprofil des sekundären Endgeräts zum Netz den temporären Schlüssel (Ksec), die temporäre Kennung (IMSIsec), die Kennung (IDsec) des sekundären Endgeräts und die Kennung (ID_{NE}) des Zugangsnetzes enthält,
wobei der Empfang dieser Daten dem sekundären Endgerät seine Authentifizierung beim identifizierten Zugangsnetz und die Authentifizierung des Zugangsnetzes beim sekundären Endgerät anzeigt.

2. Verfahren nach dem vorhergehenden Anspruch, das enthält:
- Generierung (E13) eines dem sekundären Endgerät eigenen sekundären Sitzungshauptschlüssels (Kasmesec) ausgehend vom temporären Schlüssel (Ksec) und von der Kennung (IDsec) des sekundären Endgeräts.

3. Hilfsverfahren bei der Erlangung eines Zugangsprofils zu einem Kommunikationsnetz (NE) durch ein sekundäres Endgerät (UE2) über ein Hauptendgerät (UEI), wobei das Hauptendgerät ein einen Authentifizierungsschlüssel enthaltendes Sicherheitsmodul enthält, wobei der Authentifizierungsschlüssel vom Netz und vom Hauptendgerät verwendet wird, um mindestens einen dem Hauptendgerät eigenen Sitzungshauptschlüssel (Kasme) zu generieren, wobei das vom Hauptendgerät durchgeführte Verfahren enthält:
- Erlangung (E2) einer Kennung (IDsec) des sekundären Endgeräts,
- Senden (E3) einer Anforderung eines temporären Abonnements für das sekundäre Endgerät an das Netz (NE), wobei die Anforderung die Kennung (IDsec) des sekundären Endgeräts enthält,
- Empfang (E9) einer vom Netz generierten temporären Kennung (IMSIsec) des sekundären Endgeräts vom Netz,
- Generierung (E10) eines dem sekundären Endgerät eigenen temporären Schlüssels (Ksec) ausgehend vom Sitzungshauptschlüssel des Hauptendgeräts (Kasme) und von der temporären Kennung (IMSIsec) des sekundären Endgeräts,
- Senden (E11) des temporären Schlüssels (Ksec) und der temporären Kennung (IMSIsec) des sekundären Endgeräts an das sekundäre Endgerät und einer Kennung (ID_{NE}) des Zugangsnetzes an das Netz.

4. Verfahren nach Anspruch 3, wobei die Anforderung eines temporären Abonnements für das sekundäre Endgerät eine Dauer des Abonnements enthält.

5. Verfahren zur Generierung eines Zugangsprofils zu einem Kommunikationsnetz (NE) für ein sekundäres Endgerät (UE2) über ein Hauptendgerät (UEI), wobei das Hauptendgerät ein einen Authentifizierungsschlüssel enthaltendes Sicherheitsmodul enthält, wobei der Authentifizierungsschlüssel vom Netz und vom Hauptendgerät verwendet wird, um mindestens einen dem Hauptendgerät eigenen Sitzungshauptschlüssel (Kasme) zu generieren, wobei das vom Netz durchgeführte Verfahren enthält:
- Empfang (E4) einer Anforderung eines temporären Abonnements für das sekundäre Endgerät vom Hauptendgerät, wobei die Anforderung eine Kennung (IDsec) des sekundären Endgeräts enthält,
- Generieren (E5) einer temporären Kennung (IMSIsec) und eines dem sekundären Endgerät eigenen temporären Schlüssels (Ksec), wobei der temporäre Schlüssel (Ksec) ausgehend von der temporären Kennung (IMSIsec) des sekundären Endgeräts und vom Sitzungshauptschlüssel (Kasme) des Hauptendgeräts generiert wird, wobei das Zugangsprofil des sekundären Endgeräts zum Netz den temporären Schlüssel (Ksec), die temporäre Kennung (IMSIsec), die Kennung (IDsec) des sekundären Endgeräts und eine Kennung (ID_{NE}) des Zugangsnetzes zum Netz enthält,
- Senden (E8) der temporären Kennung (IMSIsec) des sekundären Endgeräts an das Hauptendgerät.

6. Verfahren nach dem vorhergehenden Anspruch, das enthält:
- Generieren (E6) eines dem sekundären Endgerät eigenen sekundären Sitzungshauptschlüssels (Kasmesec) ausgehend vom temporären Schlüssel (Ksec) und von der Kennung (IDsec) des sekundären Endgeräts.

7. Sekundäres Endgerät (UE2), das eingerichtet ist, um ein Zugangsprofil zu einem Kommunikationsnetz (NE) über ein Hauptendgerät (UE1) zu erlangen, wobei das Hauptendgerät ein einen Authentifizierungsschlüssel enthaltendes Sicherheitselement enthält, wobei der Authentifizierungsschlüssel vom Netz und vom Hauptendgerät verwendet wird, um mindestens einen dem Hauptendgerät eigenen Sitzungshauptschlüssel (Kasme) zu generieren, wobei das sekundäre Endgerät enthält:
- Liefereinrichtungen (305), die eingerichtet sind, um eine Kennung (IDsec) des sekundären Endgeräts an das Hauptendgerät zu liefern,
- Empfangseinrichtungen (306), die eingerichtet sind, um einen dem sekundären Endgerät eigenen temporären Schlüssel (Ksec), eine temporäre Kennung (IMSIsec) des sekundären Endgeräts und eine Kennung (ID_{NE}) des Zugangsnetzes zum Netz enthaltende Daten vom Hauptendgerät zu empfangen, wobei der temporäre Schlüssel, die Kennung des Netzes und die Kennung des sekundären Endgeräts dazu bestimmt sind, einen mit dem Netz gemeinsam genutzten sekundären Sitzungshauptschlüssel zu berechnen, wobei der temporäre Schlüssel (Ksec) ausgehend von der vom Netz generierten temporären Kennung (IMSIsec) des sekundären Endgeräts und vom Sitzungshauptschlüssel (Kasme) des Hauptendgeräts generiert wird, wobei das Zugangsprofil des sekundären Endgeräts zum Netz den temporären Schlüssel (Ksec), die temporäre Kennung (IMSIsec), die Kennung (IDsec) des sekundären Endgeräts und die Kennung (ID_{NE}) des Zugangsnetzes enthält, wobei der Empfang dieser Daten dem sekundären Endgerät seine Authentifizierung beim identifizierten Zugangsnetz und die Authentifizierung des Zugangsnetzes beim sekundären Endgerät anzeigt.

8. Sekundäres Endgerät nach dem vorhergehenden Anspruch, das Generierungseinrichtungen (307) enthält, die eingerichtet sind, um einen dem sekundären Endgerät eigenen sekundären Sitzungshauptschlüssel (Kasmesec) ausgehend vom temporären Schlüssel (Ksec) und von der Kennung (IDsec) des sekundären Endgeräts zu generieren.

9. Programm für ein Endgerät, das Programmcodeanweisungen enthält, die dazu bestimmt sind, die Ausführung der Schritte des Verfahrens zur Erlangung eines Zugangsprofils zu einem Kommunikationsnetz nach Anspruch 1 oder Anspruch 2 zu steuern, wenn das Programm auf dem Endgerät ausgeführt wird.

10. Hauptendgerät (UE1), das eingerichtet ist, um zur Erlangung eines Zugangsprofils zu einem Kommunikationsnetz (NE) durch ein sekundäres Endgerät (UE2) zu verhelfen, wobei das Hauptendgerät ein einen Authentifizierungsschlüssel enthaltendes Sicherheitsmodul enthält, wobei der Authentifizierungsschlüssel vom Netz und vom Hauptendgerät verwendet wird, um mindestens einen dem Hauptendgerät eigenen Sitzungshauptschlüssel (Kasme) zu generieren, wobei das Hauptendgerät enthält:
- Erlangungseinrichtungen (205), die eingerichtet sind, um eine Kennung (IDsec) des sekundären Endgeräts zu erlangen,
- erste Sendeeinrichtungen (206), die eingerichtet sind, um eine Anforderung eines temporären Abonnements für das sekundäre Endgerät an das Netz zu senden, wobei die Anforderung die Kennung (IDsec) des sekundären Endgeräts enthält,
- Empfangseinrichtungen (207), die eingerichtet sind, um eine vom Netz generierte temporäre Kennung (IMSIsec) des sekundären Endgeräts vom Netz zu empfangen,
- Generierungseinrichtungen (208), die eingerichtet sind, um einen dem sekundären Endgerät eigenen temporären Schlüssel (Ksec) zu generieren, wobei der temporäre Schlüssel ausgehend vom Sitzungshauptschlüssel (Kasme) des Hauptendgeräts und von der temporären Kennung (IMSIsec) des sekundären Endgeräts generiert wird,
- zweite Sendeeinrichtungen (209), die eingerichtet sind, um den temporären Schlüssel (Ksec), die temporäre Kennung (IMSIsec) und eine Kennung (ID_{NE}) des Zugangsnetzes zum Netz an das sekundäre Endgerät zu senden.

11. Programm für ein Endgerät, das Programmcodeanweisungen enthält, die dazu bestimmt sind, die Ausführung der Schritte des Hilfsverfahrens zur Erlangung eines Zugangsprofils zu einem Kommunikationsnetz durch ein sekundäres Endgerät (UE2) über das Benutzer-Endgerät nach Anspruch 3 oder Anspruch 4 zu steuern, wenn das Programm auf dem Endgerät ausgeführt wird.

12. Vorrichtung (NE) eines Kommunikationsnetzes, die eingerichtet ist, um ein Zugangsprofil zu einem Kommunikationsnetz für ein sekundäres Endgerät (UE2) über ein Hauptendgerät (UE1) zu generieren, wobei das Hauptendgerät ein einen Authentifizierungsschlüssel enthaltendes Sicherheitsmodul enthält, wobei der Authentifizierungsschlüssel vom Netz und vom Hauptendgerät verwendet wird, um mindestens einen dem Hauptendgerät eigenen Sitzungshauptschlüssel (Kasme) zu generieren, wobei die Vorrichtung enthält:
- Empfangseinrichtungen (405), die eingerichtet sind, um eine Anforderung eines temporären Abonnements für das sekundäre Endgerät vom Hauptendgerät zu empfangen, wobei die Anforderung eine Kennung (IDsec) des sekundären Endgeräts enthält,
- erste Generierungseinrichtungen (406), die eingerichtet sind, um eine temporäre Kennung (IMSIsec) und einen dem sekundären Endgerät eigenen temporären Schlüssel (Ksec) zu generieren, wobei der temporäre Schlüssel (Ksec) ausgehend von der temporären Kennung (IMSIsec) des sekundären Endgeräts und vom Sitzungshauptschlüssel (Kasme) des Hauptendgeräts generiert wird, wobei das Zugangsprofil des sekundären Endgeräts zum Netz den temporären Schlüssel (Ksec), die temporäre Kennung (IMSIsec), die Kennung (IDsec) des sekundären Endgeräts und eine Kennung (ID_{NE}) des Zugangsnetzes zum Netz enthält,
- Sendeeinrichtungen (408), die eingerichtet sind, um die temporäre Kennung des sekundären Endgeräts an das Hauptendgerät zu senden.

13. Vorrichtung nach dem vorhergehenden Anspruch, die zweite Generierungseinrichtungen (407) enthält, die eingerichtet sind, um einen dem sekundären Endgerät eigenen sekundären Sitzungshauptschlüssel (Kasmesec) ausgehend vom temporären Schlüssel und von der Kennung des sekundären Endgeräts zu generieren, wobei ein Zugangsprofil des sekundären Endgeräts zum Netz den sekundären Sitzungshauptschlüssel, die temporäre Kennung des sekundären Endgeräts und eine Kennung des Netzes enthält.

14. Programm für eine Vorrichtung eines Kommunikationsnetzes, das Programmcodeanweisungen enthält, die dazu bestimmt sind, die Ausführung der Schritte eines Verfahrens zur Generierung eines Zugangsprofils zu einem Kommunikationsnetz für ein sekundäres Endgerät über ein Hauptendgerät nach Anspruch 5 zu steuern, wenn das Programm auf der Vorrichtung ausgeführt wird.

15. System zur Erlangung eines Zugangsprofils zu einem Kommunikationsnetz durch ein sekundäres Endgerät über ein Hauptendgerät, das enthält:
- eine Vorrichtung (NE) nach Anspruch 12 oder Anspruch 13,
- ein Benutzer-Hauptendgerät (UE1) nach Anspruch 10 und mindestens ein sekundäres Endgerät (UE2) nach Anspruch 7 oder Anspruch 8.

## Claims

1. Method for obtaining a profile for access to a communication network (NE) by a secondary terminal (UE2) via a main terminal (UE1), the main terminal comprising a security element comprising an authentication key, said authentication key being used by the network and by the main terminal to generate at least one session master key (Kasme) specific to the main terminal, the method, implemented by the secondary terminal, comprising:
- provision (E2) to the main terminal of an identifier (IDsec) of the secondary terminal,
- reception (E12) from the main terminal of data comprising a temporary key (Ksec) specific to the secondary terminal, a temporary identifier (IMSIsec) of the secondary terminal, and an identifier (ID_{NE}) of the network for access to the network, said temporary key, the identifier of the network and the identifier of the secondary terminal being intended to calculate a secondary session master key shared with the network, said temporary key being generated on the basis of the temporary identifier of the secondary terminal (IMSIsec) generated by the network and of the session master key (Kasme) of the main terminal, the profile for access to the network of the secondary terminal comprising the temporary key (Ksec), the temporary identifier (IMSIsec), the identifier (IDsec) of the secondary terminal and the identifier (ID_{NE}) of the access network,
the reception of these data indicating to the secondary terminal its authentication with the access network identified and the authentication of said access network with the secondary terminal.

2. Method according to the preceding claim, comprising:
- generation (E13) of a secondary session master key (Kasmesec) specific to the secondary terminal on the basis of the temporary key (Ksec) and of the identifier (IDsec) of the secondary terminal.

3. Method for aiding the obtaining of a profile for access to a communication network (NE) by a secondary terminal (UE2) via a main terminal (UE1), the main terminal comprising a security module comprising an authentication key, said authentication key being used by the network and by the main terminal to generate at least one session master key (Kasme) specific to the main terminal, the method, implemented by the main terminal, comprising:
- obtaining (E2) of an identifier (IDsec) of the secondary terminal,
- sending (E3) to the network (NE) of a request for temporary subscription for the secondary terminal, said request comprising the identifier (IDsec) of the secondary terminal,
- reception (E9), from the network, of a temporary identifier (IMSIsec) of the secondary terminal generated by the network,
- generation (E10) of a temporary key (Ksec) specific to the secondary terminal, on the basis of the session master key of the main terminal (Kasme) and of the temporary identifier (IMSIsec) of the secondary terminal,
- sending (E11) to the secondary terminal of the temporary key (Ksec) and of the temporary identifier (IMSIsec) of the secondary terminal, and of an identifier (ID_{NE}) of the network for access to the network.

4. Method according to Claim 3, in which the request for temporary subscription for the secondary terminal comprises a duration of the subscription.

5. Method for generating a profile for access to a communication network (NE) for a secondary terminal (UE2) via a main terminal (UE1), the main terminal comprising a security module comprising an authentication key, said authentication key being used by the network and by the main terminal to generate at least one session master key (Kasme) specific to the main terminal, the method implemented by the network comprising:
- reception (E4), from the main terminal, of a request for temporary subscription for the secondary terminal, said request comprising an identifier (IDsec) of the secondary terminal,
- generation (E5) of a temporary identifier (IMSIsec) and of a temporary key (Ksec) specific to the secondary terminal, said temporary key (Ksec) being generated on the basis of the temporary identifier (IMSIsec) of the secondary terminal and of the session master key (Kasme) of the main terminal, the profile for access to the network of the secondary terminal comprising the temporary key (Ksec), the temporary identifier (IMSIsec), the identifier (IDsec) of the secondary terminal, and an identifier (ID_{NE}) of the network for access to the network,
- sending (E8) to the main terminal of the temporary identifier (IMSIsec) of the secondary terminal.

6. Method according to the preceding claim, comprising:
- generation (E6) of a secondary session master key (Kasmesec) specific to the secondary terminal on the basis of the temporary key (Ksec) and of the identifier (IDsec) of the secondary terminal.

7. Secondary terminal (UE2) designed to obtain a profile for access to a communication network (NE) via a main terminal (UE1), the main terminal comprising a security element comprising an authentication key, said authentication key being used by the network and by the main terminal to generate at least one session master key (Kasme) specific to the main terminal, the secondary terminal comprising:
- means (305) of provision, designed to provide an identifier (IDsec) of the secondary terminal to the main terminal,
- means (306) of reception, designed to receive from the main terminal data comprising a temporary key (Ksec) specific to the secondary terminal, a temporary identifier (IMSIsec) of the secondary terminal, and an identifier (ID_{NE}) of the network for access to the network, said temporary key, the identifier of the network and the identifier of the secondary terminal being intended to calculate a secondary session master key shared with the network, said temporary key (Ksec) being generated on the basis of the temporary identifier (IMSIsec) of the secondary terminal generated by the network and of the session master key (Kasme) of the main terminal, the profile for access to the network of the secondary terminal comprising the temporary key (Ksec), the temporary identifier (IMSIsec), the identifier (IDsec) of the secondary terminal and the identifier (ID_{NE}) of the access network, the reception of these data indicating to the secondary terminal its authentication with the access network identified and the authentication of said access network with the secondary terminal.

8. Secondary terminal according to the preceding claim, comprising generating means (307), designed to generate a secondary session master key (Kasmesec) specific to the secondary terminal on the basis of the temporary key (Ksec) and of the identifier (IDsec) of the secondary terminal.

9. Program for a terminal, comprising program code instructions intended to control the execution of the steps of the method for obtaining a profile for access to a communication network, according to Claim 1 or Claim 2, when the program is executed on said terminal.

10. Main terminal (UE1) designed to aid the obtaining of a profile for access to a communication network (NE) by a secondary terminal (UE2), the main terminal comprising a security module comprising an authentication key, said authentication key being used by the network and by the main terminal to generate at least one session master key (Kasme) specific to the main terminal, the main terminal comprising:
- obtaining means (205), designed to obtain an identifier (IDsec) of the secondary terminal,
- first sending means (206), designed to send to the network a request for temporary subscription for the secondary terminal, said request comprising the identifier (IDsec) of the secondary terminal,
- reception means (207), designed to receive from the network a temporary identifier (IMSIsec) of the secondary terminal generated by the network,
- generating means (208), designed to generate a temporary key (Ksec) specific to the secondary terminal, said temporary key being generated on the basis of the session master key (Kasme) of the main terminal and of the temporary identifier (IMSIsec) of the secondary terminal,
- second sending means (209), designed to send to the secondary terminal the temporary key (Ksec), the temporary identifier (IMSIsec) and an identifier (ID_{NE}) of the network for access to the network.

11. Program for a terminal, comprising program code instructions intended to control the execution of the steps of the method for aiding the obtaining of a profile for access to a communication network by a secondary terminal (UE2) via the user terminal, according to Claim 3 or Claim 4, when the program is executed on said terminal.

12. Device (NE) of a communication network, designed to generate a profile for access to a communication network for a secondary terminal (UE2) via a main terminal (UE1), the main terminal comprising a security module comprising an authentication key, said authentication key being used by the network and by the main terminal to generate at least one session master key (Kasme) specific to the main terminal, the device comprising:
- reception means (405), designed to receive, from the main terminal, a request for temporary subscription for the secondary terminal, said request comprising an identifier (IDsec) of the secondary terminal,
- first generating means (406), designed to generate a temporary identifier (IMSIsec) and a temporary key (Ksec) specific to the secondary terminal, said temporary key (Ksec) being generated on the basis of the temporary identifier (IMSIsec) of the secondary terminal and of the session master key (Kasme) of the main terminal, the profile for access to the network of the secondary terminal comprising the temporary key (Ksec), the temporary identifier (IMSIsec), the identifier (IDsec) of the secondary terminal and an identifier (ID_{NE}) of the network for access to the network,
- sending means (408), designed to send the temporary identifier of the secondary terminal to the main terminal.

13. Device according to the preceding claim, comprising second generating means (407), designed to generate a secondary session master key (Kasmesec) specific to the secondary terminal on the basis of the temporary key and of the identifier of the secondary terminal, a profile for access to the network of the secondary terminal comprising the secondary session master key, the temporary identifier of the secondary terminal and an identifier of the network.

14. Program for a device of a communication network, comprising program code instructions intended to control the execution of the steps of a method for generating a profile for access to a communication network for a secondary terminal via a main terminal, according to Claim 5, when the program is executed on said device.

15. System for obtaining a profile for access to a communication network by a secondary terminal via a main terminal comprising:
- a device (NE) according to Claim 12 or Claim 13,
- a user main terminal (UE1) according to Claim 10, and at least one secondary terminal (UE2) according to Claim 7 or Claim 8.
